# EUROPEAN PATENT SPECIFICATION

(11) **EP 2 981 055 B1**
(45) Date of publication and mention of the grant of the patent: **22.02.2017**
(21) Application number: 15172183.4
(22) Date of filing: 15.06.2015
(51) Int. Cl.: H04N 1/00, H04W 4/00

(54) **DEVICE CONTROL APPARATUS, DEVICE CONTROL METHOD AND RECORDING MEDIUM FOR RECORDING DEVICE CONTROL PROGRAM**
VORRICHTUNGSSTEUERGERÄT - UND VERFAHREN, UND EIN SPEICHERMEDIUM ZUM SPEICHERN EINES GERÄTESTEUERPROGRAMMS
DISPOSITIF DE COMMANDE D'UN APPAREIL

(30) Priority: 29.07.2014 JP 2014154217
(43) Date of publication of application: 03.02.2016
(73) Proprietor: Seiko Epson Corporation, Shinjuku-ku Tokyo (JP)
(72) Inventor: KOJIMA, Naoki, Suwa-shi, Nagano 392-8502 (JP); KANEKO, Taisuke, Suwa-shi, Nagano 392-8502 (JP)
(74) Representative: Miller Sturt Kenyon

(56) References cited:
- EP-A2- 2 637 092
- EP-A2- 2 753 055
- US-A1- 2013 229 673

## Description

### CROSS REFERENCES TO RELATED APPLICATIONS

This application claims priority to Japanese Application No. 2014-154217, filed July 29, 2014, the entirety of which is incorporated by reference herein.

### BACKGROUND

### 1. Technical Field

The present invention relates to a device control apparatus that is capable of performing short distance wireless communication with a device, a device control method, and a recording medium for recording a device control program.

### 2. Related Art

In recent years, data transmission and reception between mobile equipment such as a smartphone and a printer or the like has been performed by high speed wireless communication. The information processing system that is shown in JP-A-2009-135865 performs printing by transmitting and receiving printing data by performing short distance wireless communication, so-called Near Field Communication (NFC) between a mobile terminal and a multifunctional machine, and switching to Bluetooth (registered trademark) standard high speed wireless communication after a connection has been established. Short distance wireless communication is performed by a user bringing a mobile terminal into contact with a predetermined contact position of a multifunctional machine, that is, by an NFC communication unit of a mobile terminal being brought close to an NFC communication unit of a multifunctional machine. In this instance, the mobile terminal is only brought into contact with the multifunctional machine once in order to perform printing.

However, in only bringing mobile equipment into contact with a printer once, it is not possible to discriminate the kind of sheets onto which printing is supported (the kind of specification) by the printer to which the mobile equipment has been brought into contact using the mobile equipment. Therefore, this results in circumstances such as there being no alternative other than to transmit and receive printing data of a standard fixed form size such as A4 size or letter size, and there being no alternative other than to transmit and receive printing data with a sheet size that is supported by all models. As a result of this, there are circumstances in which printing according to the specifications of the printer is not performed, and therefore, disadvantages such as it not being possible to sufficiently take advantage of the capabilities of the printer in printing, arise.

Additionally, the abovementioned problem is not limited to printers, but is also applies to various devices such as scanners and multifunctional machines.

EP 2753055 discloses an image forming apparatus having a near field communication (NFC) function and a method of performing setting an image job by using an NFC device. The method includes tagging an NFC device to receive setting information stored in the NFC device and performing an image job based on the received setting information.

US2013229673 (A1) discloses a wireless communication apparatus for wireless communication with a communication device by first and second wireless communication methods, the second wireless communication method having a communicable range wider than the first wireless communication method.

### SUMMARY

An advantage of some aspects of the invention is to provide a technology that is capable of executing a process according to various specifications in a device with which a connection is established using the short distance wireless communication.

According to an aspect of the invention, there is provided a device control apparatus according to claim 1.

According to the aspect, it is possible to provide a technology that is capable of executing a process according to various specifications in the device with which a connection is established using the short distance wireless communication.

Preferable features are set out in claims 2 to 10.

Furthermore, the invention can be applied to a system that includes a device control apparatus (for example, an image formation system or an image reading system), a device control method that includes steps that correspond to each unit mentioned above, a processing method that includes the device control method (for example, an image formation method or an image reading method), a device control program causing a computer to realize functions that correspond to each unit mentioned above, a processing program that includes the device control program (for example, an image formation program or an image reading program), a computer readable medium which records the programs and the like. The apparatus that is mentioned above may be configured by a plurality of portions, which are decentralized.

According to a further aspect of the present invention there is provided a device control method according to claim 11.

According to a still further aspect of the present invention there is provided a non-transitory computer readable recording medium according to claim 12.

### BRIEF DESCRIPTION OF THE DRAWINGS

Embodiments of the invention will now be described by way of example only with reference to the accompanying drawings, wherein like numbers reference like elements.
Fig. 1 is a block diagram that schematically shows a configuration example of a system that includes a device control apparatus.
Fig. 2 is a diagram that schematically shows a first example of various screens that are displayed by the device control apparatus.
Fig. 3 is a flowchart that shows a first example of a device control process.
Fig. 4 is a sequence diagram that schematically shows an operation example of a system in a case in which the device control apparatus is brought in contact with a device that is different from a set device.
Fig. 5 is a flowchart that shows a second example of a device control process.
Fig. 6 is a diagram that schematically shows a second example of various screens that are displayed by the device control apparatus.
Fig. 7 is a flowchart that shows a third example of a device control process.
Fig. 8 is a flowchart that shows a fourth example of a device control process.

### DESCRIPTION OF EXEMPLARY EMBODIMENTS

Hereinafter, embodiments of the invention will be described. Naturally, the following embodiments are merely illustrative examples of the invention, and all of the features that are shown in the embodiments are not necessarily essential to the means for solving the problem. (1) Summary of Present Technology

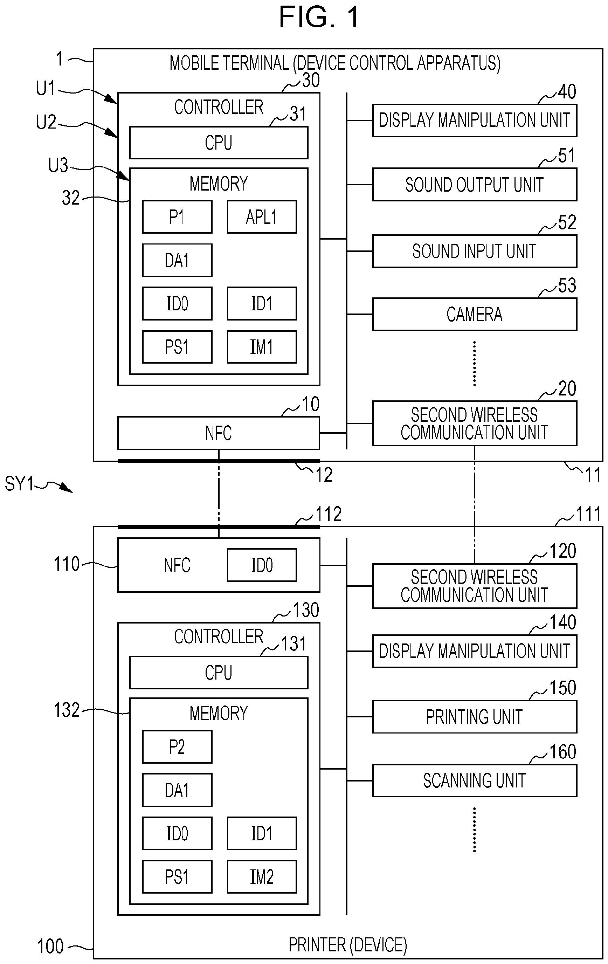

Firstly, a summary of the present technology will be described with reference to Figs. 1 to 8.

### Aspect 1

A device control apparatus (for example, mobile equipment 1) that is shown in Figs. 1 to 8 is provided with a short distance wireless communication unit (for example, an NFC unit 10), a settings unit U1 and a process execution unit U2 as fundamental elements. The short distance wireless communication unit (10) performs a short distance wireless communication with a device (for example, a printer 100). The settings unit U1 performs settings related to a process to be executed in the device (100). The process execution unit U2 executes a process in the device (100) in accordance with the settings of the settings unit U1. The device control apparatus (1) wirelessly receives specification information DA1 related to specifications of the device (100) from the device (100) when a first connection with the device (100) is established using the short distance wireless communication, the settings unit U1 performs settings related to a process according to the specifications of the device (100) on the basis of the specification information DA1, and the process execution unit U2 executes a process of the settings according to the specifications of the device (100), in the device (100) when a second connection with the device (100) is established using the short distance wireless communication.

Since specifications of the device (100) are not known in the device control apparatus (1) when the device control apparatus (1) is initially brought close to the device (100), it is not possible to execute a process matching various specifications of the device (100) in the device (100). In the present technology, when the device control apparatus (1) is initially brought close to the device (100), a first connection is established between the device control apparatus (1) and the device (100) using short distance wireless communication, and specification information DA1 is wirelessly received in the device control apparatus (1) from the device (100). As a result of this, it is possible for the device control apparatus (1) to execute a process matching various specifications of the device (100) in the device (100). Thereafter, if the device control apparatus (1) is brought close to device (100), a second connection is established between the device control apparatus (1) and the device (100) using short distance wireless communication, and a process of the settings according to the specifications of the device (100) are executed in the device (100).

Since the specification information DA1 related to the specifications of the device (100) is acquired by the first connection, and the process of the settings according to the specifications of the device (100) are performed by the second connection, it is possible to match the process that are set by the settings unit U1 to various specifications. Therefore, the present technology can provide a device control apparatus that is capable of executing a process according to various specifications in the device with which a connection is established using the short distance wireless communication.

In this instance, a device includes an image formation device such as a printing device or a display device, an image reading device such as a scanner, a multifunctional machine in which an image formation device and an image reading device are combined, and the like. A process to be executed in the device includes a process that forms an image by transmitting data of the image to an image formation device (or a multifunctional machine or the like), a process that receives data of an image by reading the image in an image reading device (or a multifunctional machine or the like), and the like. Specification information includes a size of sheet that is printable by a printing device, a type of sheet, information of whether or not sheets can be printed double-sided, information of whether or not a printing device can print double-sided, information of whether or not a printing device can print in color, a type of paper supply device, a size of sheet that is readable by a scanner, information of whether or not a scanner can read double-sided.

Short distance wireless communication includes NFC-type wireless communication, infrared communication such as IrDA (Infrared Data Association) standard, and the like. Additionally, NFC is an example of an international standard of short distance wireless communication that performs data communication at close range of approximately ten or so cm.

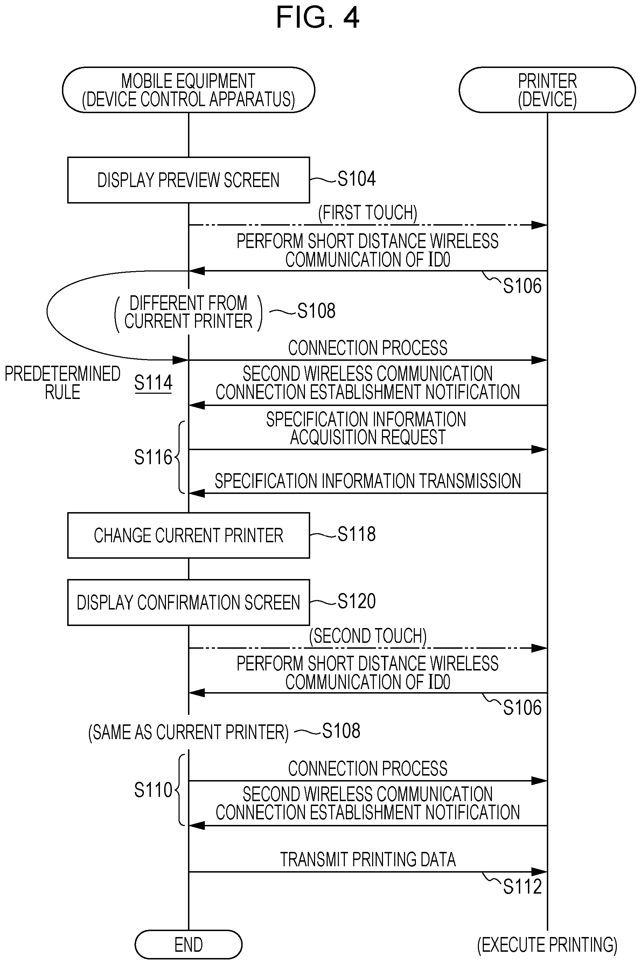

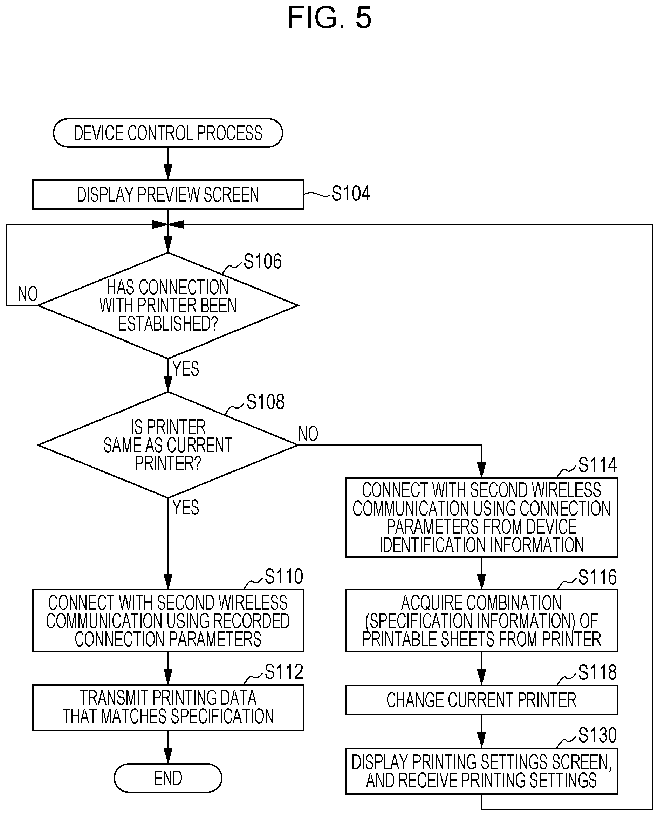

### Aspect 2 (refer to Figs. 4 and 5)

The process execution unit U2 may receive settings of specifications by displaying a settings screen 86 of the specifications on the basis of the specification information DA1 when the specification information DA1 is wirelessly received from the device (100). The process execution unit U2 may execute a process in the device (100) by matching settings of the received specifications in accordance with the settings of the settings unit U1 when a second connection with the device (100) has been established using the short distance wireless communication. Since it is possible to set the specifications of the device (100) with which the first connection is established, the present aspect can provide a device control apparatus that is suitable for executing a process in a device according to various specifications.

Naturally, as a simple process, the process execution unit U2 may automatically set the specifications on the basis of the specification information DA1, and execute a process in the device (100) by matching set specifications in accordance with the settings of the settings unit U1 when the second connection has been.

### Aspect 3

The device control apparatus (1) may be provided with a recording unit U3 that records the specification information DA1 that corresponds to a set device (100). In a case in which the specification information DA1 that corresponds to the device (100) with which the first connection is established, is recorded in the recording unit U3 when the first connection is established, in the first connection, the process execution unit U2 may execute a process in the device (100) by matching the specifications of the set device (100) on the basis of the recorded the specification information DA1 in accordance with the settings of the settings unit U1. Since a process matching the specifications of the device (100) is performed in the first connection in a case in which the specification information DA1 that corresponds to the device (100) with which the first connection is established, is recorded in the recording unit U3, the present aspect can lighten a wireless communication process with the device.

### Aspect 4

In addition, in a case in which the specification information DA1 that corresponds to the device (100) with which the first connection is established, is not recorded in the recording unit U3 when the first connection is established, the device control apparatus (1) may wirelessly receive the specification information DA1 that corresponds to the device (100) with which the first connection is established, from the device (100) and record the specification information DA1 in the recording unit U3. In addition, in the device control apparatus (1), the process execution unit U2 may execute a process in the device (100) by matching the specifications of the device (100) on the basis of the specification information DA1 that is recorded in the recording unit U3 in accordance with the settings of the settings unit U1 when the second connection with the device (100) is established using the short distance wireless communication. In this case, since the specification information DA1 related to the specifications of the device (100) is recorded in the recording unit U3 by the first connection, and a process matching the specifications of the device (100) is performed by the second connection, it is possible to match the process that is set by the settings unit U1 with various specifications. Accordingly, the present aspect can provide a device control apparatus that is suitable for executing a process in a device according to various specifications.

### Aspect 5

The settings unit U1 may display a preview screen 83 of an image IM1 that is to be processed in the device (100). In a case in which the specification information DA1 that corresponds to the device (100) with which the first connection is established, is recorded in the recording unit U3 when the first connection is established in a state in which the preview screen 83 is being displayed, in the first connection, the process execution unit U2 may execute a process in the device (100) by matching a process of the image IM1 to specifications of the device (100) on the basis of the specification information DA1 in accordance with the settings of the settings unit U1. In addition, in the device control apparatus (1), in a case in which the specification information DA1 that corresponds to the device (100) with which the first connection is established, is not recorded in the recording unit U3 when the first connection is established in a state in which the preview screen 83 is being displayed, the specification information DA1 that corresponds to the device (100) with which the first connection is established, may be wirelessly received from the device (100) and recorded in the recording unit U3, and the process execution unit U2 may execute a process in the device (100) by matching a process of the image IM1 to specifications of the device (100) on the basis of the specification information DA1 that is recorded in the recording unit U3 in accordance with the settings of the settings unit U1 when a second connection with the device (100) is established using the short distance wireless communication. Since only a manipulation that brings the device control apparatus (1) close to the device (100) in a state in which the preview screen 83 of the image IM1 is being displayed is necessary, the present aspect can execute a process in a device according to the specifications through an intuitive user manipulation.

Naturally, in order to increase the manipulation methods, the same condition classification process as that mentioned above may be performed in a case in which the first connection is established in a state in which the preview screen of an image is not being displayed.

### Aspect 6

The settings unit U1 may displays the preview screen 83 according to a launch process of a different application program APL1 that is installed on the device control apparatus (1), which launches applications that include the settings unit and the process execution unit. Since it is possible to execute a process matching the specifications in the device (100) when the different application program APL1 is being executed, the present aspect can achieve an improvement in user-friendliness.

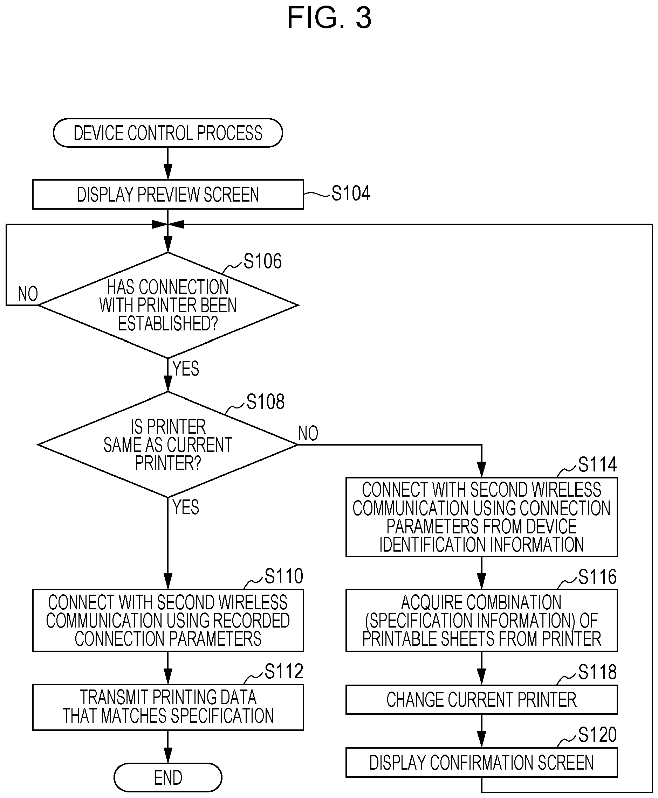

### Aspect 7 (refer to Figs. 3, 4 and 7)

The device control apparatus (1) may be provided with a second wireless communication unit (20) that performs a second wireless communication, which differs from the short distance wireless communication, with the device (100). The second wireless communication unit (20) may receive the specification information DA1 from the device (100). Since the reception of the specification information DA1 can be performed using the second wireless communication, which differs from the short distance wireless communication, the present aspect can reduce a data volume of the short distance wireless communication unit of the device.

In this instance, the second wireless communication includes Wireless Fidelity (Wi-Fi) Direct type wireless communication, Bluetooth (registered trademark) standard wireless communication, and the like, and peer-to-peer (P2P) wireless communication is preferable. In Wi-Fi Direct type wireless communication, the pieces of equipment communicate directly one-to-one (peer-to-peer) without using a wireless Local Area Network (LAN) router or the like. In addition, as Wi-Fi Direct, a communication method, encryption and the like adopts an autonomous GO mode that performs peer-to-peer wireless communication with another existing piece of wireless LAN compatible equipment a as a result of the device (printer 100) itself being a group owner, and operating as an access point.

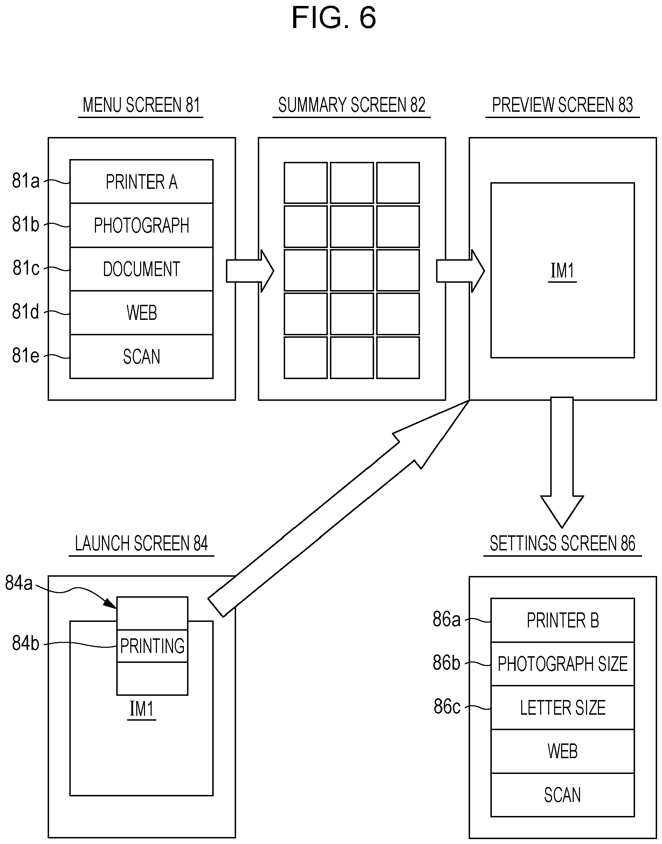

### Aspect 8 (refer to Fig. 6)

In addition, the short distance wireless communication unit (10) may receive the specification information DA1 from the device (100). Since the reception of the specification information DA1 is performed using short distance wireless communication, the aspect can provide a device control apparatus that is also capable of executing a process according to various specifications in a device without using wireless communication that differs from the short distance wireless communication.

### Aspect 9

The process execution unit U2 may execute a process in the device (100) by matching the specifications of the device (100) on the basis of the specification information DA1 in accordance with the settings of the settings unit U1 by performing second wireless communication of the second wireless communication unit (20) with the device (100) when a second connection with the device (100) is established using the short distance wireless communication. Since a process matching the specifications of the device (100) is performed by the second wireless communication, the aspect can provide a device control apparatus that is suitable for executing a process in a device according to various specifications.

### Aspect 10

In a case in which the communication speed of the short distance wireless communication by the short distance wireless communication unit (10) is slower than the communication speed of the second wireless communication by the second wireless communication unit (20), the process matching the specifications of the device (100) is performed using the second wireless communication, which is faster than the short distance wireless communication. Accordingly, the aspect can provide a device control apparatus that is more suitable for executing a process in a device according to various specifications.

### Aspect 11

Furthermore, the present technology includes an aspect that is provided with a short distance wireless communication unit (10) that performs short distance wireless communication with a device (100), a settings unit U1 that performs settings related to a process to be executed in the device (100), a recording unit U3 that records the specification information DA1 related to the specifications of the device (100) that are set by the settings unit U1, and a process execution unit U2 that executes a process in the device (100) in accordance with the settings of the settings unit U1, in the first connection, the process execution unit U2 executes a process in the device (100) by matching the set specifications of the device (100) on the basis of the recorded specification information DA1 in accordance with the settings of the settings unit U1 in a case in which the specification information DA1 that corresponds to the device (100) with which the first connection is established, is recorded in the recording unit U3 when the first connection with the device (100) is established using short distance wireless communication, the specification information DA1 that corresponds to the device (100) with which the first connection is established, is wirelessly received from the device (100) and recorded in the recording unit U3 in a case in which the specification information DA1 that corresponds to the device (100) with which the first connection is established, is not recorded in the recording unit U3 when the first connection with the device (100) is established using short distance wireless communication, and the process execution unit U2 executes a process in the device (100) by matching specifications of the device (100) on the basis of the specification information DA1 that is recorded in the recording unit U3 in accordance with the settings of the settings unit U1 when a second connection with the device (100) is established using the short distance wireless communication.

If the specification information DA1 that corresponds to the device (100) with which the first connection is established is not recorded in the recording unit U3 when the device control apparatus (1) is initially brought close to the device (100), the specifications of the device (100) are not known in the device control apparatus (1). In this case, firstly, the specification information DA1 is wirelessly received in the device control apparatus (1) from the device (100). As a result of this, the device control apparatus (1) is capable of executing a process matching various specifications of the device (100) in the device (100). Thereafter, if the device control apparatus (1) is brought close to device (100), a second connection is established between the device control apparatus (1) and the device (100) using short distance wireless communication, and a process of the settings according to the specifications of the device (100) are executed in the device (100).

Meanwhile, the specification information DA1 that corresponds to the device (100) with which the first connection is established is recorded in the recording unit U3, since the process of the settings according to the specifications of the device (100) are performed in the first connection, a wireless communication process with the device is lightened.

As a result of the abovementioned configurations, the present aspect can provide a device control apparatus that is suitable for executing a process in a device according to various specifications with which a connection is established using short distance wireless communication.

### Aspect 12

An aspect of a device control method according to any one of the device control apparatuses (1) of the abovementioned aspects 1 to 11 also exhibits the abovementioned effects.

### Aspect 13

An aspect of a device control program P1 according to any one of the device control apparatuses (1) of the abovementioned aspects 1 to 11 also exhibits the abovementioned effects.

### (2) First Specific Example

Hereinafter, a first specific example of a device control apparatus, a device control method and a device control program will be described. Fig. 1 schematically shows a configuration example of an image formation system SY1 that includes a printer that is equipped with a scanner (a device) 100, and mobile equipment (a device control apparatus) 1.

The printer 100 that is equipped with a scanner that is shown in Fig. 1 is a multifunctional machine that is provided with an NFC unit (a short distance wireless communication unit) 110, a second wireless communication unit 120, a controller 130, a display manipulation unit 140, a printing unit 150, a scanning unit 160 and the like. In a case in which a printing device, which is a type of image formation device is used as the device of the present technology, instead of a printer that is equipped with a scanner, the printing device may be a printer that is equipped with a facsimile, a printer that is not equipped with a scanner, or the like.

The NFC unit 110 is an NFC tag that performs NFC type short distance wireless communication with the mobile equipment 1, and is provided with an integrated circuit (IC) in which information is recorded, a loop antenna, and a communication circuit. A data transfer rate of the NFC type short distance wireless communication is approximately 100 to 400 kbps, for example. A contact unit 112 for bringing the mobile equipment 1 into contact (touching) with the printer 100 is provided on a housing 111 of the printer 100 (for example, a front surface of the printer 100). The NFC unit 110 is disposed on a rear side of the contact unit 112. Device identifier information ID0 is stored in the NFC unit 110 in a readable manner, and the NFC unit 110 that is shown in Fig. 1 wirelessly transmits the device identifier information ID0 using an NFC method when an NFC unit 10 of the mobile equipment 1 is brought close to the contact unit 112. Additionally, the device identifier information ID0 may be information that can identify the printer 100, may be a Service Set Identifier (an SSID) that is set to an access point function of the printer 100, which will be described later, or may be information that differs from the SSID such as a Media Access Control Address (a MAC address) or a product serial number.

The second wireless communication unit 120 is a communication interface that performs second wireless communication, which differs from the short distance wireless communication, with the mobile equipment 1. It is possible to use a wireless LAN interface in the second wireless communication unit 120 in a case in which Wi-Fi Direct type wireless communication is performed as the second wireless communication. The communication range of Wi-Fi Direct type wireless communication is greater than that of NFC type short distance wireless communication, and the communication speed thereof is faster than NFC type short distance wireless communication. In such an instance, after the mobile equipment 1, which has been brought close to the printer 100, is identified using NFC type short distance wireless communication, a large amount of data is transmitted and received using Wi-Fi Direct type wireless communication. Additionally, when Wi-Fi Direct type wireless communication is used, the SSID is the device identifier information.

The controller 130 is provided with a Central Processing Unit (CPU) 131, a memory 132 and the like. The CPU 131 performs mainly information processing and control in the printer 100. The memory 132 includes, for example, non-volatile memory such as Read Only Memory (ROM), Random Access Memory (RAM) or flash memory. A control program P2, specification information DA1 related to the specifications of the printer 100, device identifier information ID0 and ID1, a password PS1, data of a read image IM2, and the like are stored in the memory 132. The control program P2 causes the printer 100 to realize a function that controls the operations of each unit of the 110, 120, 140, 150 and 160. The specification information DA1 includes, for example, a size of sheet that is printable, a type of sheet, information of whether or not sheets can be printed double-sided, information of whether or the printing unit 150 can print double-sided, information of whether or not the printing unit 150 can print in color, a type of paper supply device, a size of sheet that is readable by the scanning unit 160, information of whether or not the scanning unit 160 can read double-sided, and the like. The specification information DA1 of the present specific example includes device information that is capable of specifying the model of the printer 100, and for example, a model name and the like of the printer 100. The device identifier information ID1 need only be information that identifies the printer 100, and can, for example, use a MAC address or a product serial number.

The display manipulation unit 140 is provided with a display unit such as a liquid crystal display panel or the like, and a manipulation unit such as a plurality of keys, an operational state of the printer 100, various settings screens and the like are displayed on the display unit, and manipulations of a user are received with the manipulation unit. If a liquid crystal display panel is used in the display unit, and a touch panel that is layered on the liquid crystal display panel is used as the manipulation unit, it is possible to receive contact manipulations of a user on a liquid crystal display screen.

The printing unit 150 prints an image on a target printing object such as photographic paper, normal paper, Overhead Projector (OHP) sheets or the like. For example, when the printer 100 receives data of an image IM1 from the mobile equipment 1, the printing unit 150 forms the image IM1 on a target printing object in accordance with the data. It is possible to use an ink jet type printing device, an electrophotography type printing device or the like in the printing unit 150.

The scanning unit 160, for example, reads the image IM2 of a manuscript by aiming light from a light source toward the manuscript. It is possible to use a flatbed type scanner in which the manuscript is disposed between a manuscript platform glass and a manuscript cover, a scanner that is equipped with a manuscript delivery device or the like as the scanning unit 160.

The mobile equipment 1 that is shown in Fig. 1 is provided with an NFC unit (the short distance wireless communication unit) 10, a second wireless communication unit 20, a controller 30, a display manipulation unit 40, a sound output unit 51, a sound input unit 52, a camera 53 and the like. The mobile equipment 1 includes a mobile telephone such as a smartphone, a Personal Digital Assistant (PDA), a portable music reproduction device, a portable video reproduction device, a tablet type personal computer, a notebook personal computer or the like.

The NFC unit 10 is an NFC reader that performs NFC type short distance wireless communication with a device such as the printer 100, and is provided with an IC, a loop antenna, and a communication circuit. A contact unit 12 for bringing the mobile equipment 1 into contact (touching) with a device (100) is provided on a housing 11 of the mobile equipment 1 (for example, a rear surface of the mobile equipment 1). The NFC unit 10 is disposed inside the mobile equipment 1 in the vicinity of the contact unit 12. The NFC unit 10 wirelessly receives information from an NFC tag when the NFC tag is brought close thereto using an NFC method. Additionally, the NFC reader may be an NFC reader/writer that has a function of writing data to a partner IC.

The second wireless communication unit 20 is a communication interface that performs second wireless communication, which differs from the short distance wireless communication, with the device (100). It is possible to use a wireless LAN interface in the second wireless communication unit 20 in a case in which Wi-Fi Direct type wireless communication is performed as the second wireless communication. In this case, the second wireless communication unit 20 performs a peer-to-peer wireless connection with a piece of mobile equipment without using another relay device by the second wireless communication unit 20 itself functioning as an access point.

The controller 30 is provided with a CPU 31, a memory 32 and the like. The CPU 31 mainly performs information processing and control in the mobile equipment 1. The memory 32 includes, for example, non-volatile memory such as ROM, RAM or flash memory. A device control program P1, an application program APL1, specification information DA1, device identifier information ID0 and ID1, a password PS1, data of a printing target image IM1, and the like are stored in the memory 32. The device control program P1 causes the mobile equipment 1 to function as a device control apparatus by being installed on the mobile equipment 1. The application program APL1 adds functions to the mobile equipment 1 by being installed on the mobile equipment 1. The specification information DA1 is recorded in order to match printing data to specifications such as a size of sheet that is printable by a printer that is currently set (a current printer). Device information that is included in the specification information DA1 used in order to display a name (for example, a model name) of the current printer. The device identifier information ID0 and ID1, and the password PS1 are recorded in order to wireless communicate one-to-one (peer-to-peer) with the printer 100. Additionally, the memory 32 configures the recording unit U3 that records the specification information DA1 that corresponds to the set device (100). The controller 130 configures the settings unit U1 and the process execution unit U2 with the display manipulation unit 40.

The display manipulation unit 40 is provided with a display unit such as a liquid crystal display panel or the like, and a manipulation unit such as a touch panel or the like, an operational state of the mobile equipment 1, various settings screens and the like are displayed on the display unit, and manipulations of a user are received with the manipulation unit. If a liquid crystal display panel is used in the display unit, and a touch panel that is layered on the liquid crystal display panel is used as the manipulation unit, it is possible to receive contact manipulations of a user on a liquid crystal display screen. Naturally, it is also possible to use a plurality of keys in the manipulation unit.

The sound output unit 51 generates sounds in accordance with sound signals from a telephone line or the like. It is possible to use a general purpose speaker in the sound output unit 51, for example. The sound input unit 52 converts sounds from a user or the like into sound signals. It is possible to use a general purpose microphone in the sound input unit 52, for example. The camera 53 is provided with an optical system that includes a lens, an area image sensor, an image processing circuit and the like, and creates digital data of an image IM1 that is captured.

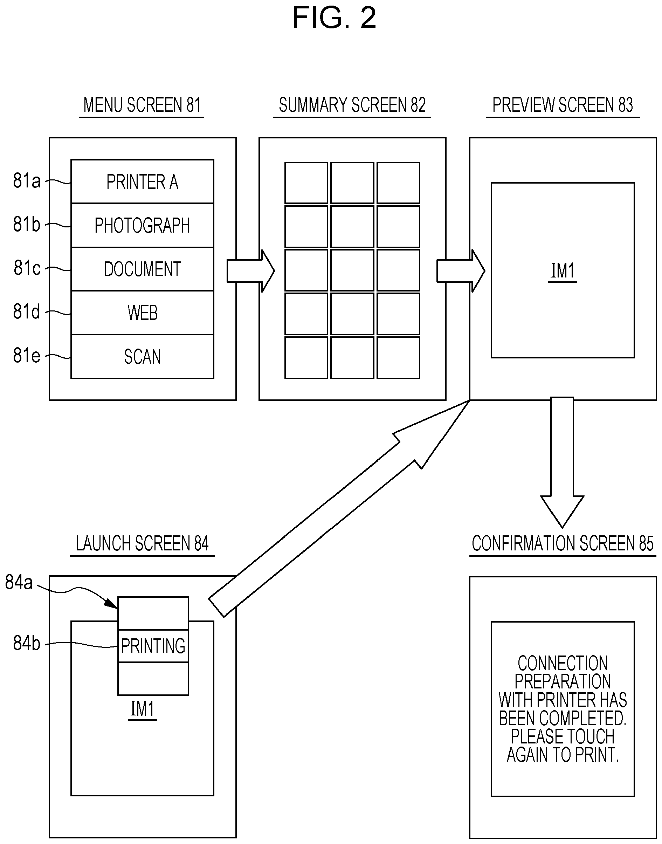

Fig. 2 schematically shows examples of various screens 81 to 85 that are displayed by the mobile equipment 1. The screens 81 to 85 are displayed due to functions that the device control program P1 causes the mobile equipment 1 to realize.

When the device control program P1 is executed, a menu screen 81 that is shown in Fig. 2 is displayed. A display region 81a of the current printer, a manipulation region 81b for selectively manipulating a photographic file, a manipulation region 81c for selectively manipulating a text file, a manipulation region 81d for selectively manipulating a home page, a manipulation region 81e for performing settings manipulation of a scanner, and the like, are provided on the screen 81. For example, a printer model name that is included in the specification information DA1, which is stored in the memory 32 is displayed on the current printer display region 81a. When a user performs contact manipulation on the manipulation region 81b of a photograph, a photograph summary screen 82 is displayed. A plurality of photographs are displayed on the summary screen 82. When a user performs contact manipulation on any one of the photographs of the summary screen 82, a preview screen 83 of the photograph that was contact manipulated is displayed. A photograph that is displayed on the preview screen 83 is set as a printing target image IM1.

The device control program P1 can be activated by a launch process of the application program APL1. For example, when an image IM1 for which printing is desired is selectively manipulated in a state in which the application program APL1 is active, and a manipulation menu 84a is displayed, a printing manipulation region 84b, which is added through installation of the device control program P1, is displayed. A manipulation menu 84a in which the printing manipulation region 84b is provided is displayed on a launch screen 84 that is shown in Fig. 2. If a user performs contact manipulation on the printing manipulation region 84b, a launch process that activates the device control program P1 is performed, and the preview screen 83 of the image IM1 for which printing is desired is displayed.

Additionally, in a case in which a printer 100, which the mobile equipment 1 is brought into contact with in a state in which the preview screen 83 is being displayed, differs from the current printer, after the printer 100 which the mobile equipment 1 has been brought into contact with, is set as the current printer, a confirmation screen 85 that is shown in Fig. 2 is displayed. The confirmation screen 85 is a screen that prompts the mobile equipment 1 to be brought into contact with the printer 100 again in order to cause the printer 100 to execute a printing process matching the specifications of the printer 100 which has been contacted once.

In addition, in a case in which a printer 100, which the mobile equipment 1 is brought into contact with, differs from the current printer, if the mobile equipment 1 is brought into contact with the printer 100 in a state in which the menu screen 81 is being displayed, the mobile equipment 1 performs a process that sets the contacted printer 100 as the current printer. In a case in which a printer 100, which the mobile equipment 1 is brought into contact with, is the same as the current printer, even if the mobile equipment 1 is brought into contact with the printer 100 in a state in which the menu screen 81 is being displayed, the mobile equipment 1 does not do anything.

Fig. 3 shows an example of a device control process that is performed by the mobile equipment 1. Fig. 4 schematically shows an operation example of the system SY1 in a case in which the mobile equipment 1 is brought into contact with a printer 100 that differs from the current printer. The processes can be executed in parallel with other processes by multitasking. Additionally, the mobile equipment 1 that performs the processes of Steps S104, and S118 to S120 configures the settings unit U1. In addition, the mobile equipment 1 that performs the process of Step S106 configures the process execution unit U2. Hereinafter, the word "Step" will be omitted.

When a user activates the device control program P1, the controller 130 of the mobile equipment 1 initiates a device control process. As shown in Fig. 2, the mobile equipment 1 receives selectively manipulation of an image IM1 from the screens 81 and 82, or displays the preview screen 83 of an image IM1 to be processed in the printer 100 as a result of receiving contact manipulation of the printing manipulation region 84b from the launch screen 84 (S104). The display process is a process that performs settings related to a process that is to be executed in the device. Next, the mobile equipment 1 determines whether or not a connection has been established with the printer 100 (S106), and the process of S106 is repeated until a connection is established. Since the NFC units 10 and 110 cannot perform short distance wireless communication if the mobile equipment 1 is far from the printer 100, the process stops at S106. When a user brings the contact unit 12 of the mobile equipment 1 into contact with the contact unit 112 of a printer (a first touch), the NFC unit 110 of the printer transmits the device identifier information ID0 such as a MAC address using NFC type short distance wireless communication. When the mobile equipment 1 receives the device identifier information ID0 using short distance wireless communication, an initial stage connection is established between the mobile equipment 1 and the printer 100, and the mobile equipment 1 determines whether or not the printer 100 with which a connection has been established is the same as the current printer (S108).

The current printer is a device for which specification information DA1 and device identifier information ID0 and ID1 are stored in the memory 32 as a printer in which a printing process is to be executed. Accordingly, the determination process of S108 can, for example, be set as a process that determines whether or not device identifier information that is received from the printer 100 using short distance wireless communication is the same as device identifier information that is stored in the memory 32. The items of device identifier information being different is a case in which the specification information DA1 that corresponds to a printer with which a first connection is established, is not recorded in the memory 32 when a first connection is established in a state in which the preview screen 83 is being displayed. In this case, the mobile equipment 1 connects with the printer 100 using the second wireless communication such as a Wi-Fi Direct type by creating a connection parameter (device identifier information ID1 such as an SSID and a password PS1) from the device identifier information ID0 (S114).

A connection of the Wi-Fi Direct type second wireless communication (hereinafter also referred to as Wi-Fi Direct communication) can be established in the following manner, for example.

A predetermined rule that creates a different SSID (the device identifier information ID1) and a password PS1 from the device identifier information ID0 such as a MAC address, is determined in advance as a prerequisite for performing a connection process. For example, it is possible to use a hash function that creates an SSID and a password PS1 from the device identifier information ID0 as the predetermined rule. The device control program P1 is set so that a connection parameter creation program that creates an SSID and a password PS1 from the device identifier information ID0 in accordance with the predetermined rule, is included therein. Since the SSID (ID1) and the password PS1 that are stored in the memory 132 of the printer 100 are created from the device identifier information ID0 that is stored in the NFC unit 110 in accordance with the predetermined rule, the predetermined rule is a rule that is common to the mobile equipment 1 on which the device control program P1 is installed and the printer 100. As shown in Fig. 4, when the mobile equipment 1 receives the device identifier information ID0 from the NFC unit 110 of the printer using short distance wireless communication, the SSID and the password are created in accordance with the predetermined rule. When a connection process between the mobile equipment 1 and the second wireless communication unit 120 of the printer is performed using the SSID and password, the printer 100 establishes a connection with the mobile equipment 1 using Wi-Fi Direct communication, and information that represents the fact that a Wi-Fi Direct communication connection has been established is transmitted (a second wireless communication connection establishment notification). As a result of this, a Wi-Fi Direct communication connection is established between the mobile equipment 1 that has been brought close to the printer 100 and the printer 100, and wireless communication between the printer 100 and the mobile equipment 1 is possible even if the mobile equipment 1 is separated from the printer 100.

Additionally, there are cases in which the mobile equipment 1 is connected to a wireless LAN using a wireless router before Wi-Fi Direct communication is performed. In this case, the mobile equipment 1 hands over (migrates) Wi-Fi communication with the wireless router to Wi-Fi Direct communication.

After a second wireless communication connection has been established, the mobile equipment 1 acquires the specification information DA1 such as a combination of printable sheets from the printer 100 using second wireless communication (S116). If description is given with reference to Fig. 4, the second wireless communication unit 20 of the mobile equipment 1 transmits a specification information acquisition request using second wireless communication, and the printer 100 that receives the specification information acquisition request reads and the specification information DA1 from the memory 132 and transmits the specification information DA1 using second wireless communication. If the specification information DA1 is wirelessly transmitted using Wi-Fi Direct communication, which is faster than NFC type short distance wireless communication, the mobile equipment 1 can wirelessly receive the specification information DA1 rapidly. The mobile equipment 1 that has received the specification information DA1 stores the specification information DA1 in the memory 32, and changes the current printer to the printer with which a connection is established on the basis of the specification information DA1 (S118). For example, the current printer is set by the specification information DA1 and the device identifier information ID0 being stored in the memory 32. That is, in S114 to S118, the mobile equipment 1 wirelessly receives the specification information DA1 that corresponds to the printer 100 with which the first connection is established, from the printer 100 and stores the specification information DA1 in the memory 32. As a result of this, settings related to a printing process according to specifications of the printer 100 are performed on the basis of the specification information DA1. Additionally, when the menu screen 81 that is shown in Fig. 2 is displayed, for example, a model name of the printer 100 is displayed on the basis of the specification information DA1. In addition, in a case in which the mobile equipment 1 is connected to a wireless LAN, the mobile equipment 1 hands over Wi-Fi Direct communication to Wi-Fi communication with the wireless router.

After changing the current printer, the mobile equipment 1 displays the confirmation screen 85 such as that shown in Fig. 2 (S120). The confirmation screen 85 may be continuously displayed until the mobile equipment 1 is brought into contact with the printer 100 again, or may be set to return to the preview screen 83 after a predetermined amount of time such as a few seconds.

After display of the confirmation screen, the mobile equipment 1 determines whether or not a connection with the printer 100 has been established (S106), and the process of S106 is repeated until a connection is established. When a user brings the contact unit 12 of the mobile equipment 1 close to the contact unit 112 of a printer (a second touch that is shown in Fig. 4), the NFC unit 110 of the printer transmits the device identifier information ID0 such as a MAC address using NFC type short distance wireless communication. An initial stage connection is established between the mobile equipment 1 and the printer 100 again as a result of the NFC unit 10 of the mobile equipment 1 receiving the device identifier information ID0, and the mobile equipment 1 determines whether or not the printer 100 with which a connection has been established is the same as the current printer (S108).

Since the current printer is changed in S118 mentioned above, the specification information DA1 that corresponds to the set printer 100 and the device identifier information ID0 and ID1 are stored in the memory 32. Accordingly, it is determined that the printer 100 is the same, and the mobile equipment 1 connects with the printer 100 with the second wireless communication such as a Wi-Fi Direct type using a connection parameter (device identifier information ID1 such as an SSID and a password PS1) that is stored in the memory 32 (S110). For example, as shown in Fig. 4, when a connection process between the mobile equipment 1 and the second wireless communication unit 120 of the printer is performed using the SSID and password, the printer 100 establishes a connection with the mobile equipment 1 using Wi-Fi Direct communication, and thereafter, information that represents the fact that a Wi-Fi Direct communication connection has been established is transmitted (a second wireless communication connection establishment notification). As a result of this, a Wi-Fi Direct communication connection is established between the mobile equipment 1, which has been brought close to the printer 100 again, and the printer 100, and wireless communication between the printer 100 and the mobile equipment 1 is possible even if the mobile equipment 1 is separated from the printer 100. In this instance, the mobile equipment 1 also hands over Wi-Fi communication with the wireless router to Wi-Fi Direct communication in a case in which the mobile equipment 1 is connected to a wireless LAN before Wi-Fi Direct communication is performed.

After the second wireless communication connection has been established, the mobile equipment 1 creates printing data matching the specifications of the printer 100 from the data of the image IM1 on the basis of the specification information DA1 that is stored in the memory 32, and transmits the created printing data using the second wireless communication (S112). As shown in Fig. 4, the printer 100 that receives printing data prints the image IM1 on a target printing object in the printing unit 150 in accordance with the printing data. That is, in S110 to S112, the mobile equipment 1 executes a printing process of the settings process according to the specifications of the printer 100 in the printer 100 on the basis of the specification information DA1 for which a process for the image IM1 are stored in the memory 32.

For example, a sheet size that corresponds to a current printer before a change (set as a printer A) is A4, and a photograph size is not included in the specification information, and a sheet size that corresponds to a current printer after a change (set as a printer B) is photograph size, and A4 size is not included in the specification information. In a case in which printing is executed by only bringing mobile equipment into contact with the printer B once, since the kind of sheet on which printing in the printer B is supported, is not known in the mobile equipment, for example, there is no alternative other than to wirelessly transmit printing data matching the A4 size that corresponds to the printer A. Since the printer B is not compatible with A4 size, a disadvantage of printing not being performed arises. Since it is possible for the present technology to acquire the specification information DA1 that represents the kind of sheet on which printing in the printer B is supported, with the first contact, it is possible to wirelessly transmit printing data matching the photograph size that corresponds to the printer B with the second contact.

In the manner described above, since the specification information DA1 related to the specifications of the printer 100 is acquired with the first connection, and a process matching the specifications of the printer 100 is performed with the second connection, it is possible to match a process that is set by the settings unit U1 to various specifications. Accordingly, it is possible to execute a process in a printer in which a connection has been established using short distance wireless communication according to various specifications. In addition, since the first and second connections are respectively performed with the manipulation of bringing the mobile equipment 1 into contact with the printer 100 as a trigger, it is possible to use the printer with an intuitive and easy manipulation.

Additionally, in a case in which a printer with which the first connection has been established in a state in which the preview screen 83 is being displayed, is the current printer, the specification information DA1 that corresponds to the current printer is already stored in the memory 32. In this case, in the first connection, the mobile equipment 1 executes a printing process for the image IM1 in the printer 100 by matching the specifications of the printer 100 on the basis of the specification information DA1 without performing the processes of S114 to S120 (S110 to S112). In this manner, since a process matching the specifications of the printer 100 is performed in the first connection in a case in which the specification information DA1 that corresponds to a printer with which the first connection has been established, is stored in the memory 32, a wireless communication process with the printer is lightened.

### (3) Second Specific Example

Fig. 5 shows a second example of a device control process that is performed by the mobile equipment 1. Fig. 6 schematically shows a second example of various screens that are displayed by the mobile equipment 1. In this instance, in Fig. 5, the process of S120 that is shown in Fig. 3 is substituted with S130, and in Fig. 6, the confirmation screen 85 that is shown in Fig. 4 is substituted with the settings screen 86 of printing (specifications). In the second example, a configuration in which a user can manipulate printing settings such as sheet size as a result of a printing settings screen 86 being displayed when the current printer is changed by a first contact, is used. Additionally, it is possible to make a hardware configuration of the image formation system in the second example the same as that of the image formation system SY1 that is shown in Fig. 1, and therefore, description thereof will be omitted. The same applies to a third and a fourth example that will be described later.

In the processes that are shown in Fig. 5, the processes of S114 to S118 and S130 are performed in a case in which the printer B with which a connection is established with a first contact, is different from the current printer A. When the mobile equipment 1 acquires the specification information DA1 from the printer B and stores the specification information DA1 in the memory 32 using the second wireless communication, the current printer is changed to the printer B (S116 to S118). Thereafter, the mobile equipment 1 displays a printing (specification) settings screen 86 such as that shown in Fig. 6 on the basis of the acquired specification information DA1, and receives printing settings such as sheet size (S130). A display region 86a of the current printer after a change, manipulation regions 86b and 86c for selectively manipulating a sheet size, and the like, are provided on the settings screen 86. For example, when a user performs contact manipulation on the manipulation region 86b, photograph size is set as the sheet size for printing the image IM1, and information that represents the photograph size is stored in the memory 32. In a case in which contact manipulation of the manipulation region 86c is performed, information that represents a letter size is stored in the memory 32. In this manner, the mobile equipment 1 receives the settings of specifications by displaying the settings screen 86 of the specifications on the basis of the specification information DA1, and stores information that represents the settings of the received specifications in the memory 32 when the specification information DA1 is wirelessly received from the printer B.

After the setting of the specifications, the mobile equipment 1 determines whether or not a connection with the printer 100 has been established (S106), and the process of S106 is repeated until a connection is established. When a user brings the contact unit 12 of the mobile equipment 1 close to the contact unit 112 of a printer (a second touch that is shown in Fig. 4), the mobile equipment 1 determines that a printer with which a connection has been established is the same as the current printer (S108). Thereafter, the mobile equipment 1 connects with the printer 100 with the second wireless communication such as a Wi-Fi Direct type using a connection parameter that is stored in the memory 32 (S110). After a second wireless communication connection has been established, the mobile equipment 1 creates printing data matching printing settings received in S130 from the data of the image IM1 on the basis of the specification information DA1 that is stored in the memory 32, and transmits the created printing data using the second wireless communication (S112). The printer 100 that receives printing data prints the image IM1 on a target printing object in the printing unit 150 in accordance with the printing data. For example, in a case in which contact manipulation of the manipulation region 86b is performed on the settings screen 86 that is shown in Fig. 6, printing data matching the photograph size is created in accordance with information that represents the setting of the photograph size, which is stored in the memory 32.

Since it is possible to set the specifications of a printer with which the first connection has been established, the second example can provide a device control apparatus that is suitable for executing a process in a printer according to various specifications.

### (4) Third Specific Example

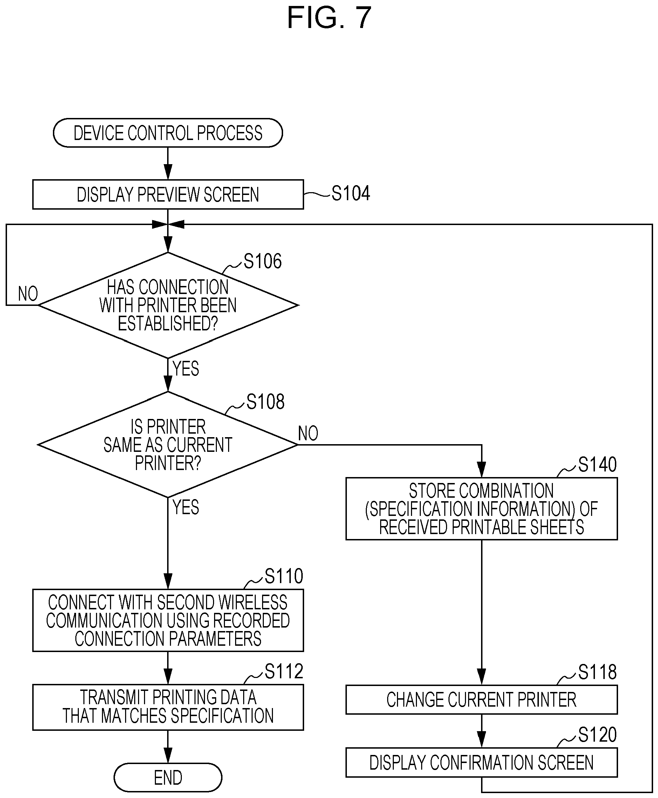

Fig. 7 shows a third example of a device control process that is performed by the mobile equipment 1. In this instance, in Fig. 7, the processes of S114 to S116 that are shown in Fig. 3 are substituted with S140. In the third example, a configuration in which the specification information and the like is acquired using the short distance wireless communication such as an NFC type in place of acquiring the specification information and the like using the Wi-Fi Direct type second wireless communication, is used. Therefore, the specification information DA1 is recorded in the NFC unit 110 of the printer 100.

When the preview screen 83 is displayed (S104), the mobile equipment 1 determines whether or not a connection with the printer 100 has been established (S106), and the process of S106 is repeated until a connection is established. When a user brings the contact unit 12 of the mobile equipment 1 close to the contact unit 112 of a printer (a first touch), the NFC unit 110 of the printer transmits the device identifier information ID0 such as a MAC address, and the specification information DA1 using NFC type short distance wireless communication. When the mobile equipment 1 receives the information ID0 and DA1 using short distance wireless communication, an initial stage connection is established between the mobile equipment 1 and the printer 100, and the mobile equipment 1 determines whether or not the printer 100 with which a connection has been established is the same as the current printer (S108). In a case in which it is determined that the printer 100 with which a connection has been established is not the same, the mobile equipment 1 stores the specification information DA1 received using short distance wireless communication in the memory 32 (S140). Thereafter, the mobile equipment 1 changes the current printer to the printer with which a connection has been established on the basis of the specification information DA1 (S118).

Since the reception of the specification information DA1 is performed using short distance wireless communication, the third example can also execute a process according to various specifications in the printer without using wireless communication that differs from short distance wireless communication.

### (5) Fourth Specific Example

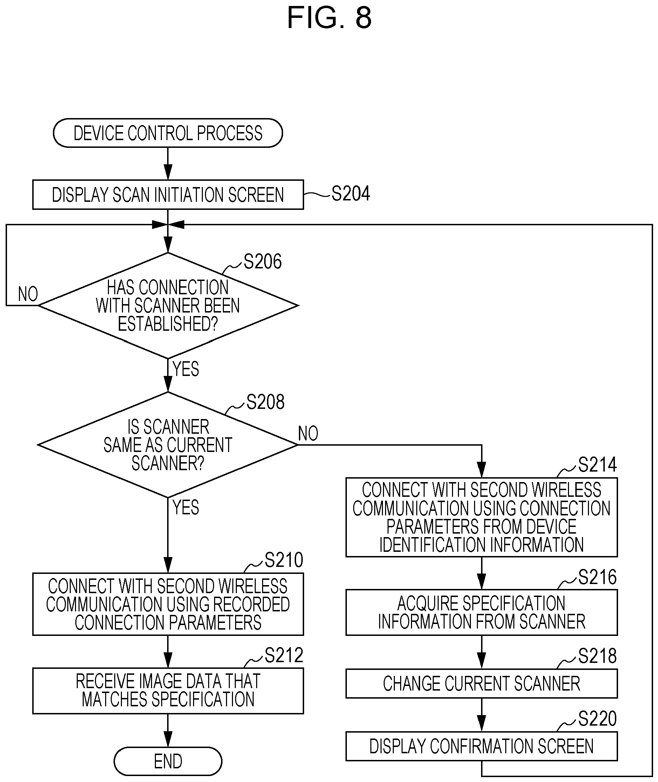

Fig. 8 shows a fourth example of a device control process that is performed by the mobile equipment 1, and shows a process example in which a scanner is used as the device (100). Additionally, since the printer 100 that is shown in Fig. 1 has the scanning unit 160, the printer functions as a scanner.

For example, when contact manipulation on the manipulation region 81e for scanner settings manipulation is received from the menu screen 81 that is shown in Fig. 2, a scanning initiation screen, which has information such as "Initiating scan. Please touch" or the like, is displayed (S204). This display process is a process that performs settings related to a process that is to be executed in the device. Next, the mobile equipment 1 determines whether or not a connection has been established with the scanner (S206), and the process of S206 is repeated until a connection is established. When a user brings the contact unit 12 of the mobile equipment 1 close to the contact unit 112 of a scanner (a first touch), the NFC unit 110 of the scanner transmits the device identifier information ID0 such as a MAC address using NFC type short distance wireless communication. When the mobile equipment 1 receives the device identifier information ID0 using short distance wireless communication, the mobile equipment 1 determines whether or not the scanner with which a connection has been established is the same as a current scanner (S208). The determination process can, for example, be set as a process that determines whether or not device identifier information that is received from the scanner using short distance wireless communication is the same as device identifier information that is stored in the memory 32. In a case in which the scanner with which a connection has been established is not the current scanner, the mobile equipment 1 connects with the scanner using the second wireless communication such as a Wi-Fi Direct type by creating a connection parameter from the device identifier information ID0 (S214).

After a second wireless communication connection has been established, the mobile equipment 1 acquires the specification information DA1 such as a combination of scannable sizes from the scanner using second wireless communication (S216). The mobile equipment 1 that has received the specification information DA1 stores the specification information DA1 in the memory 32, and changes the current scanner to the scanner with which a connection is established on the basis of the specification information DA1 (S218). That is, in S214 to S218, the mobile equipment 1 wirelessly receives the specification information DA1 that corresponds to the scanner with which the first connection is established, from the scanner and stores the specification information DA1 in the memory 32. As a result of this, settings related to an image reading process according to specifications of the scanner are performed on the basis of the specification information DA1. After changing the current scanner, the mobile equipment 1 displays a confirmation screen such as "Preparation of connection with scanner complete. Please touch again to scan" or the like (S220).

After display of the confirmation screen, the mobile equipment 1 determines whether or not a connection with the scanner has been established (S206), and the process of S206 is repeated until a connection is established. When a user brings the contact unit 12 of the mobile equipment 1 close to the contact unit 112 of a scanner (a second touch), the mobile equipment 1 determines whether or not the scanner with which a connection has been established is the same as the current scanner (S208). Thereafter, the mobile equipment 1 connects with the scanner with the second wireless communication such as a Wi-Fi Direct type using a connection parameter that is stored in the memory 32 (S210). Lastly, the mobile equipment 1 transmits a request, which reads the image IM2 matching scannable sizes of the scanner on the basis of the specification information DA1 that is stored in the memory 32, using second wireless communication, and receives data of the image IM2 from the scanner (S212). The scanner that receives a read request of the image IM2 creates data of the image IM2 with a scannable size by reading a manuscript, and transmits the data of the image IM2 using second wireless communication. As a result of this, the mobile equipment 1 receives data of the read image IM2 matching a scannable size from the scanner using the second wireless communication.

Since, in the fourth example, specification information DA1 related to the specifications of the scanner is acquired by the first connection, and a process matching the specifications of the scanner is performed by the second connection, it is possible to execute a process in the scanner according to various specifications.

### (6) Other Modification Examples

In addition to the example mentioned above, various modification examples of the invention are possible.

For example, the device control process may be performed from a state in which the preview screen is not being displayed such as a state in which a file name is displayed, without performing the preview screen display process of S104 in Figs. 3 to 5 and 7.

In the sequence view that is shown in Fig. 4, the device control apparatus may wirelessly receive the specification information from the device normally when a first connection is established without performing the determination process of S108, and execute a process matching the specifications of the device on the basis of the specification information when a second connection is established.

### (7) Conclusion

In the manner described above, according to the invention, as a result of various aspects, it is possible to provide a technology or the like that is capable of executing a process in a device with which a connection is established using the short distance wireless communication, according to various specifications. Naturally, the basic actions and effects can also be obtained with a technology or the like which is formed from constituent elements according to independent claims (including aspects that are stated in the embodiments), and which does not include constituent elements according to dependent claims.

In addition, configurations in which each configuration that is disclosed in the abovementioned embodiments and modification examples is mutually substituted, and combinations are changed, and configurations in which each configuration that is disclosed in publically known technology, the abovementioned embodiments and modification examples is mutually substituted, and combinations are changed, can also be realized. The invention also includes such configurations.

The foregoing description has been given by way of example only and it will be appreciated by a person skilled in the art that modifications can be made without departing from the scope of the present invention.

## Claims

1. A device control apparatus (1) comprising:
a short distance wireless communication unit (10) that performs short distance wireless communication with a device (100); and
a settings unit (u1) that performs settings related to a process to be executed in the device; **characterized in that** the device control apparatus further comprises:
a process execution unit (u2) that executes a process in the device in accordance with the settings of the settings unit,
wherein specification information related to a specifications of the device is wirelessly received from the device when a first connection with the device is established using the short distance wireless communication,
wherein the settings unit performs settings related to a process according to the specifications of the device on the basis of the specification information, and
wherein the process execution unit executes a process of the settings, which depend on the specifications of the device, in the device when a second connection with the device is established using the short distance wireless communication, and
wherein the short distance wireless communication is NFC-type wireless communication.

2. The device control apparatus according to Claim 1,
wherein the settings unit receives settings of specifications by displaying a settings screen of the specifications on the basis of the specification information when the specification information is wirelessly received from the device, and
wherein the process execution unit executes a process in the device by matching settings of the received specifications in accordance with the settings of the settings unit when the second connection with the device is established using the short distance wireless communication.

3. The device control apparatus according to Claim 1, further comprising:
a recording unit (u3) that records specification information that corresponds to a set device, wherein, in a case in which specification information that corresponds to a device with which the first connection is established, is recorded in the recording unit when the first connection is established, in the first connection, the process execution unit executes a process in the device by matching the set specifications of the device on the basis of the recorded specification information in accordance with the settings of the settings unit.

4. The device control apparatus according to Claim 1, further comprising:
a recording unit (u3) that records specification information that corresponds to a set device, wherein, in a case in which specification information that corresponds to a device with which the first connection is established, is not recorded in the recording unit when the first connection is established, the specification information that corresponds to the device with which the first connection is established, is wirelessly received from the device and recorded in the recording unit, and
wherein the process execution unit executes a process in the device by matching specifications of the device on the basis of the specification information that is recorded in the recording unit in accordance with the settings of the settings unit when the second connection with the device is established using the short distance wireless communication.

5. The device control apparatus according to Claim 3,
wherein the settings unit displays a preview screen of an image that is to be processed in the device,
wherein, in a case in which specification information that corresponds to the device with which the first connection is established, is recorded in the recording unit when the first connection is established in a state in which the preview screen is being displayed, in the first connection, the process execution unit executes a process in the device by matching a process of the image to specifications of the device on the basis of the specification information in accordance with the settings of the settings unit,
wherein, in a case in which specification information that corresponds to a device with which the first connection is established, is not recorded in the recording unit when the first connection is established in a state in which the preview screen is being displayed, the specification information that corresponds to the device with which the first connection is established, is wirelessly received from the device and recorded in the recording unit, and
wherein the process execution unit executes a process in the device by matching a process of the image to specifications of the device on the basis of the specification information that is recorded in the recording unit in accordance with the settings of the settings unit when the second connection with the device is established using the short distance wireless communication.

6. The device control apparatus according to Claim 5,
wherein the settings unit displays the preview screen according to a launch process of a different application that is installed on the device control apparatus, which launches applications that include the settings unit and the process execution unit.

7. The device control apparatus according to Claim 1, further comprising:
a second wireless communication unit (20) that performs a second wireless communication, which differs from the short distance wireless communication, with the device,
wherein the second wireless communication unit receives the specification information from the device.

8. The device control apparatus according to Claim 1,
wherein the short distance wireless communication unit receives the specification information from the device.

9. The device control apparatus according to Claim 1, further comprising:
a second wireless communication unit (20) that performs a second wireless communication, which differs from the short distance wireless communication, with the device,
wherein the process execution unit executes a process in the device by matching specifications of the device on the basis of the specification information in accordance with the settings of the settings unit by performing second wireless communication of the second wireless communication unit with the device when the second connection with the device is established using the short distance wireless communication.

10. The device control apparatus according to Claim 7,
wherein a communication speed of the short distance wireless communication by the short distance wireless communication unit is slower than the communication speed of the second wireless communication by the second wireless communication unit.

11. A device control method using the device control apparatus (1) of any one of the preceding claims, the method comprising:
wirelessly receiving specification information related to a specifications of a device (100) from the device when a first connection with the device is established using the short distance wireless communication,
performing settings, at the settings unit (u1), related to a process to be executed in the device depending on the specifications of the device on the basis of the specification information, and
executing, at the process execution unit (u2), a process of the settings, which depend on the specifications of the device, in the device when a second connection with the device is established using the short distance wireless, wherein the setting unit performs settings related to a process according to the specifications of the device on the basis of the specification information, and wherein the the short distance wireless communication is NFC-type wireless communication.

12. A non-transitory computer readable recording medium that records a device control program causing a computer to realize the device control method of claim 11.

## Patentansprüche

1. Gerätsteuerungsvorrichtung (1), umfassend:
eine drahtlose Kurzstreckenkommunikationseinheit (10) die eine drahtlose Kurzstreckenkommunikation mit einem Gerät (100) ausführt; und
eine Einstellungseinheit (u1), die Einstellungen ausführt, die auf einen Prozess bezogen sind, der im Gerät durchzuführen ist;
**dadurch gekennzeichnet, dass** die Gerätsteuerungsvorrichtung des Weiteren umfasst:
eine Prozessdurchführungseinheit (u2), die in Übereinstimmung mit den Einstellungen der Einstellungseinheit einen Prozess im Gerät durchführt,
wobei Spezifikationsinformationen bezüglich Spezifikationen des Geräts drahtlos vom Gerät empfangen werden, wenn eine erste Verbindung mit dem Gerät unter Verwendung der drahtlosen Kurzstreckenkommunikation eingerichtet ist,
wobei die Einstellungseinheit Einstellungen bezüglich eines Prozesses gemäß den Spezifikationen des Geräts auf Basis der Spezifikationsinformationen ausführt, und
wobei die Prozessdurchführungseinheit einen Prozess der Einstellungen, die von den Spezifikationen des Geräts abhängen, im Gerät durchführt, wenn eine zweite Verbindung mit dem Gerät unter Verwendung der drahtlosen Kurzstreckenkommunikation eingerichtet ist, und
wobei die drahtlose Kurzstreckenkommunikation eine drahtlose Kommunikation vom NFC-Typ ist.

2. Gerätsteuerungsvorrichtung nach Anspruch 1,
wobei die Einstellungseinheit Einstellungen von Spezifikationen durch Anzeigen eines Einstellungsbildschirms der Spezifikationen auf Basis der Spezifikationsinformationen empfängt, wenn die Spezifikationsinformationen drahtlos vom Gerät empfangen werden, und
wobei die Prozessdurchführungseinheit durch Abstimmen von Einstellungen der empfangenen Spezifikationen in Übereinstimmung mit den Einstellungen der Einstellungseinheit einen Prozess im Gerät durchführt, wenn die zweite Verbindung mit dem Gerät unter Verwendung der drahtlosen Kurzstreckenkommunikation eingerichtet ist.

3. Gerätsteuerungsvorrichtung nach Anspruch 1, des Weiteren umfassend:
eine Aufzeichnungseinheit (u3), die Spezifikationsinformationen aufzeichnet, die einem eingestellten Gerät entsprechen, wobei, falls Spezifikationsinformationen, die einem Gerät entsprechen, mit welchem die erste Verbindung eingerichtet ist, in der Aufzeichnungseinheit aufgezeichnet sind, wenn die erste Verbindung eingerichtet ist, in der ersten Verbindung die Prozessdurchführungseinheit durch Abstimmen der eingestellten Spezifikationen des Geräts auf Basis der aufgezeichnete Spezifikationsinformationen in Übereinstimmung mit den Einstellungen der Einstellungseinheit einen Prozess im Gerät durchführt.

4. Gerätsteuerungsvorrichtung nach Anspruch 1, des Weiteren umfassend:
eine Aufzeichnungseinheit (u3), die Spezifikationsinformationen aufzeichnet, die einem eingestellten Gerät entsprechen,
wobei, falls Spezifikationsinformationen, die einem Gerät entsprechen, mit welchem die erste Verbindung eingerichtet ist, nicht in der Aufzeichnungseinheit aufgezeichnet sind, wenn die erste Verbindung eingerichtet ist, die Spezifikationsinformationen, die dem Gerät entsprechen, mit dem die erste Verbindung eingerichtet ist, drahtlos vom Gerät empfangen und in der Aufzeichnungseinheit aufgezeichnet werden, und
wobei die Prozessdurchführungseinheit durch Abstimmen von Spezifikationen des Geräts auf Basis der Spezifikationsinformationen, die im Aufzeichnungsmedium in Übereinstimmung mit den Einstellungen der Einstellungseinheit aufgezeichnet sind, einen Prozess im Gerät durchführt, wenn die zweite Verbindung mit dem Gerät unter Verwendung der drahtlosen Kurzstreckenkommunikation eingerichtet ist.

5. Gerätsteuerungsvorrichtung nach Anspruch 3,
wobei die Einstellungseinheit einen Voransichtsbildschirm eines Bilds anzeigt, das im Gerät zu verarbeiten ist,
wobei, falls Spezifikationsinformationen, die dem Gerät entsprechen, mit welchem die erste Verbindung eingerichtet ist, in der Aufzeichnungseinheit aufgezeichnet sind, wenn die erste Verbindung in einem Zustand eingerichtet ist, in dem der Voransichtshildschirm angezeigt wird, in der ersten Verbindung die Prozessdurchführungseinheit durch Abstimmen eines Prozesses des Bilds mit Spezifikationen des Geräts auf Basis der Spezifikationsinformationen in Übereinstimmung mit den Einstellungen der Einstellungseinheit einen Prozess im Gerät durchführt,
wobei, falls Spezifikationsinformationen, die einem Gerät entsprechen, mit welchem die erste Verbindung eingerichtet ist, nicht in der Aufzeichnungseinheit aufgezeichnet sind, wenn die erste Verbindung in einem Zustand eingerichtet ist, in dem der Voransichtsbildschirm angezeigt wird, die Spezifikationsinformationen, die dem Gerät entsprechen, mit dem die erste Verbindung eingerichtet ist, drahtlos vom Gerät empfangen und in der Aufzeichnungseinheit aufgezeichnet werden, und
wobei die Prozessdurchführungseinheit durch Abstimmen eines Prozesses des Bilds mit Spezifikationen des Geräts auf Basis der Spezifikationsinformationen, die in der Aufzeichnungseinheit in Übereinstimmung mit den Einstellungen der Einstellungseinheit aufgezeichnet sind, wenn die zweite Verbindung mit dem Gerät eingerichtet ist, einen Prozess im Gerät unter Verwendung der drahtlosen Kurzstreckenkommunikation durchführt.

6. Gerätsteuerungsvorrichtung nach Anspruch 5,
wobei die Einstellungseinheit den Voransichtsbildschirm gemäß einem Startprozess einer anderen Anwendung anzeigt, die auf der Gerätsteuerungsvorrichtung installiert ist, die Anwendungen startet, die die Einstellungseinheit und die Prozessdurchführungseinheit enthalten.

7. Gerätsteuerungsvorrichtung nach Anspruch 1, des Weiteren umfassend:
eine zweite drahtlose Kommunikationseinheit (20), die eine zweite drahtlose Kommunikation mit dem Gerät ausführt, die sich von der drahtlosen Kurzstreckenkommunikation unterscheidet,
wobei die zweite drahtlose Kommunikationseinheit die Spezifikationsinformationen vom Gerät empfängt.

8. Gerätsteuerungsvorrichtung nach Anspruch 1,
wobei die drahtlose Kurzstreckenkommunikationseinheit die Spezifikationsinformationen vom Gerät empfängt.

9. Gerätsteuerungsvorrichtung nach Anspruch 1, des Weiteren umfassend:
eine zweite drahtlose Kommunikationseinheit (20), die eine zweite drahtlose Kommunikation mit dem Gerät ausführt, die sich von der drahtlosen Kurzstreckenkommunikation unterscheidet,
wobei die Prozessdurchführungseinheit einen Prozess im Gerät durchführt, durch Abstimmen von Spezifikationen des Geräts auf Basis der Spezifikationsinformationen in Übereinstimmung mit den Einstellungen der Einstellungseinheit, durch Durchführen der zweiten drahtlosen Kommunikation der zweiten drahtlosen Kommunikationseinheit mit dem Gerät, wenn die zweite Verbindung mit dem Gerät unter Verwendung der drahtlosen Kurzstreckenkommunikation eingerichtet ist.

10. Gerätsteuerungsvorrichtung nach Anspruch 7,
wobei eine Kommunikationsgeschwindigkeit der drahtlosen Kurzstreckenkommunikation durch die drahtlose Kurzstreckenkommunikationseinheit langsamer ist als die Kommunikationsgeschwindigkeit der zweiten drahtlosen Kommunikation durch die zweite drahtlose Kommunikationseinheit.

11. Gerätsteuerungsverfahren unter Verwendung der Gerätsteuerungsvorrichtung (1) nach einem der vorangehenden Ansprüche, das Verfahren umfassend:
drahtloses Empfangen von Spezifikationsinformationen bezüglich Spezifikationen eines Geräts (100) vom Gerät, wenn eine erste Verbindung mit dem Gerät unter Verwendung der drahtlosen Kurzstreckenkommunikation eingerichtet ist,
Ausführen von Einstellungen, bei der Einstellungseinheit (u1), bezüglich eines Prozesses, der im Gerät abhängig von den Spezifikationen des Geräts auf Basis der Spezifikationsinformationen durchzuführen ist, und
Durchführen, bei der Prozessdurchführungseinheit (u2), eines Prozesses der Einstellungen, die von den Spezifikationen des Geräts abhängen, im Gerät, wenn eine zweite Verbindung mit dem Gerät unter Verwendung der drahtlosen Kommunikation eingerichtet ist, wobei die Einstellungseinheit Einstellungen bezüglich eines Prozesses gemäß den Spezifikationen des Geräts auf Basis der Spezifikationsinformationen ausführt und wobei die drahtlose Kurzstreckenkommunikation eine drahtlose Kommunikation vom NFC-Typ ist.

12. Nichtflüchtiges rechnerlesbares Aufzeichnungsmedium, das ein Gerätsteuerungsprogramm aufzeichnet, das einen Rechner veranlasst, das Gerätsteuerungsverfahren nach Anspruch 11 umzusetzen.

## Revendications

1. Appareil de commande de dispositif (1) comprenant :
une unité de communication sans fil à courte distance (10) qui effectue de la communication sans fil à courte distance avec un dispositif (100) ; et
une unité de réglage (u1) qui effectue des réglages relatifs à un traitement à exécuter dans le dispositif ;
**caractérisé en ce que** l'appareil de commande de dispositif comprend en outre :
une unité d'exécution de traitement (u2) qui exécute un traitement dans le dispositif en fonction des réglages de l'unité de réglage,
dans lequel de l'information de spécification relative à une spécification du dispositif est reçue sans fil du dispositif lorsqu'une première connexion avec le dispositif est établie en utilisant la communication sans fil à courte distance,
dans lequel l'unité de réglage effectue des réglages relatifs à un traitement en fonction des spécifications du dispositif sur la base de l'information de spécification, et
dans lequel l'unité d'exécution de traitement exécute un traitement des réglages qui dépendent des spécifications du dispositif, dans le dispositif, lorsqu'une deuxième connexion est établie est établie avec le dispositif en utilisant la communication sans fil à courte distance, et
dans lequel la communication sans fil à courte distance est une communication sans fil de type NFC.

2. Appareil de commande de dispositif selon la revendication 1,
dans lequel l'unité de réglage reçoit des réglages de spécifications en affichant un écran de réglage des spécifications sur la base de l'information de spécification lorsque l'information de spécification est reçue sans fil du dispositif, et
dans lequel l'unité d'exécution de traitement exécute un traitement dans le dispositif en adaptant des réglages des spécifications reçues en fonction des réglages de l'unité de réglage lorsque la deuxième connexion avec le dispositif est établie en utilisant la communication sans fil à courte distance.

3. Appareil de commande de dispositif selon la revendication 1, comprenant en outre :
une unité d'enregistrement (u3) qui enregistre de l'information de spécification qui correspond à un dispositif réglé, dans lequel, dans le cas où de l'information de spécification qui correspond à un dispositif avec lequel la première connexion est établie est enregistrée dans l'unité d'enregistrement lorsque la première connexion est établie, lors de la première connexion, l'unité d'exécution de traitement exécute un traitement dans le dispositif en adaptant les spécifications réglées du dispositif sur la base de l'information de spécification enregistrée en fonction des réglages de l'unité de réglage.

4. Appareil de commande de dispositif selon la revendication 1, comprenant en outre :
une unité d'enregistrement (u3) qui enregistre de l'information de spécification qui correspond à un dispositif réglé,
dans lequel, dans un cas où de l'information de spécification qui correspond à un dispositif avec lequel la première connexion est établie n'est pas enregistrée dans l'unité d'enregistrement lorsque la première connexion est établie, l'information de spécification qui correspond au dispositif avec lequel la première connexion est établie est reçue sans fil du dispositif et est enregistrée dans l'unité d'enregistrement, et
dans lequel l'unité d'exécution de traitement exécute un traitement dans le dispositif en adaptant des spécifications du dispositif sur la base de l'information de spécification qui est enregistrée dans l'unité d'enregistrement en fonction des réglages de l'unité de réglage lorsque la deuxième connexion avec le dispositif est établie en utilisant la communication sans fil à courte distance.

5. Appareil de commande de dispositif selon la revendication 3,
dans lequel l'unité de réglage affiche un écran de prévisualisation d'une image qui doit être traitée dans le dispositif,
dans lequel, dans un cas où de l'information de spécification qui correspond au dispositif avec lequel la première connexion est établie est enregistrée dans l'unité d'enregistrement lorsque la première connexion est établie dans un état où l'écran de prévisualisation est affiché, lors de la première connexion, l'unité d'exécution de traitement exécute un traitement dans le dispositif en adaptant un traitement de l'image à des spécifications du dispositif sur la base de l'information de spécification en fonction des réglages de l'unité de réglage,
dans lequel, dans un cas où de l'information de spécification qui correspond à un dispositif avec lequel la première connexion est établie n'est pas enregistrée dans l'unité d'enregistrement lorsque la première connexion est établie dans un état où l'écran de prévisualisation est affiché, l'information de spécification qui correspond au dispositif avec lequel la première connexion est établie est reçue sans fil du dispositif et est enregistrée dans l'unité d'enregistrement, et
dans lequel l'unité d'exécution de traitement exécute un traitement dans le dispositif en adaptant un traitement de l'image à des spécifications du dispositif sur la base de l'information de spécification qui est enregistrée dans l'unité d'enregistrement en fonction des réglages de l'unité de réglage lorsque la deuxième connexion avec le dispositif est établie en utilisant la communication sans fil à courte distance.

6. Appareil de commande de dispositif selon la revendication 5,
dans lequel l'unité de réglage affiche l'écran de prévisualisation en fonction d'un processus de lancement d'une application différente qui est installée sur l'appareil de commande de dispositif, lequel lance des applications comprenant l'unité de réglage et l'unité d'exécution de traitement.

7. Appareil de commande de dispositif selon la revendication 1, comprenant en outre :
une deuxième unité de communication sans fil (20) qui effectue une deuxième communication sans fil, laquelle diffère de la communication sans fil à courte distance, avec le dispositif,
dans lequel la deuxième unité de communication sans fil reçoit l'information de spécification du dispositif.

8. Appareil de commande de dispositif selon la revendication 1,
dans lequel l'unité de communication sans fil à courte distance reçoit l'information de spécification du dispositif.

9. Appareil de commande de dispositif selon la revendication 1, comprenant en outre :
une deuxième unité de communication sans fil (20) qui effectue une deuxième communication sans fil, laquelle diffère de la communication sans fil à courte distance, avec le dispositif,
dans lequel l'unité d'exécution de traitement exécute un traitement dans le dispositif en adaptant des spécifications du dispositif sur la base de l'information de spécification en fonction des réglages de l'unité de réglage en effectuant une deuxième communication sans fil de la deuxième unité de communication sans fil avec le dispositif lorsque la deuxième connexion avec le dispositif est établie en utilisant la communication sans fil à courte distance.

10. Appareil de commande de dispositif selon la revendication 7,
dans lequel une vitesse de communication de la communication sans fil à courte distance par l'unité de communication sans fil à courte distance est plus lente que la vitesse de communication de la deuxième communication sans fil par la deuxième unité de communication sans fil.

11. Procédé de commande de dispositif utilisant l'appareil de commande de dispositif (1) selon l'une quelconque des revendications précédentes, le procédé comprenant :
la réception sans fil d'une information de spécification relative à une spécification d'un dispositif (100) de la part du dispositif lorsqu'une première connexion avec le dispositif est établie en utilisant la communication sans fil à courte distance,
la réalisation de réglages, au niveau de l'unité de réglage (u1), relatifs à un traitement à exécuter dans le dispositif en fonction des spécifications du dispositif sur la base de l'information de spécification, et
l'exécution, au niveau de l'unité d'exécution de traitement (u2), d'un traitement des réglages dépendant des spécifications du dispositif, dans le dispositif, lorsqu'une deuxième connexion avec le dispositif est établie en utilisant la communication sans fil à courte distance,
dans lequel l'unité de réglage effectue des réglages relatifs à un traitement en fonction de spécifications du dispositif sur la base de l'information de spécification, et dans lequel la communication sans fil à courte distance est une communication sans fil de type NFC.

12. Support d'enregistrement non transitoire lisible par ordinateur qui enregistre un programme de commande de dispositif faisant en sorte qu'un ordinateur réalise le procédé de commande de dispositif de la revendication 11.
